Europäisches Patentamt

European Patent Office

Office européen des brevets

(19)

(11) **EP 1 710 219 A1**

(12) **EUROPEAN PATENT APPLICATION**

(43) Date of publication:
**11.10.2006 Bulletin 2006/41**

(51) Int Cl.:
*C04B 38/00* (2006.01)      *C04B 37/00* (2006.01)
*B01J 35/04* (2006.01)

(21) Application number: **06290463.6**

(22) Date of filing: **22.03.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **28.03.2005 JP 2005091480**
**30.11.2005 WOPCT/JP2005/022413**

(71) Applicant: **IBIDEN CO., LTD.**
**Ogaki-shi, Gifu 503-8604 (JP)**

(72) Inventor: **Yoshida, Yutaka**
**c/o Ibiden Co., Ltd.**
**Gifu 501-0695 (JP)**

(74) Representative: **Uchida, Kenji et al**
**S.A. Fedit-Loriot et Autres**
**Conseils en Propriété Industrielle**
**38, avenue Hoche**
**75008 Paris (FR)**

(54) **Honeycomb structure**

(57)      In a honeycomb structure made of a honeycomb block including a plurality of honeycomb units joined to each other across a seal layer laid between adjacent ones and each of which is formed from a plurality of cells laid longitudinally side by side and cell walls each separating the adjacent cells from each other, or in a honeycomb structure made of a honeycomb monolith including a plurality of cells disposed longitudinally side by side and cell walls each separating the adjacent cells from each other and a seal layer provided over the outer surface of the honeycomb monolith, the seal layer has a color of 60 or more in CIE (1976) psychometric lightness (L*).

Fig. 1

**Description**

Field of the Invention

The present invention generally relates to a honeycomb structure, and more particularly to a ceramic honeycomb structure suitably usable in an exhaust gas purifying(converting) apparatus to purify(convert) gas from an internal engine used on an automobile etc.

Background Art

The honeycomb structures used in the exhaust gas purifying apparatuses for the automotive internal combustion engines include an aggregate type formed from a plurality of honeycomb units joined together across a seal layer or the like between them, a monolith type having a seal layer provided on the outer surface, etc.

Generally, many of the seal layers use a mixture of ceramic particles, as matrix, of carbide, nitride or the like having a high thermal conductivity that will contribute to an improved regeneration efficiency and various binders as an additive (as in the Japanese Unexamined Patent Publication No.JP-A-08- 28246).

For such honeycomb structures, there have been made in the past various proposals as to the geometry of the exhaust gas inlet and outlet end faces. Typical ones of such proposals concern the control of area ratio between the honeycomb unit and seal layer (as in the International Publication No. W0 03/081001) and the width adjustment of the relief zone equivalent to the seal layer (as in the Japanese Unexamined Patent Publication Nos. JP-A 2001-206780 and JP-A 2001-190916), etc.

Disclosure of the Invention

Note here that as will be known from the disclosure in the International Publication No. W0 03/081001, Japanese Unexamined Patent Publication No. JP-A 2001-206780, etc., the honeycomb structure should be designed with major consideration given to the geometry of the exhaust gas inlet and outlet end faces of the honeycomb structure, such as the area ratio between the honeycomb unit and seal layer.

The end face geometry of the honeycomb structure, especially, the ratio in area between the honeycomb unit and seal layer, has been measured in the past using a measuring instrument. Actually, however, the measurement has been made by visual check. Such a visual check leads to a result varying greatly from individual to individual. It is incorrect and takes much time and labor. One of the causes lies in that no clear discrimination can be made between the honeycomb unit or honeycomb monolith and the seal layer. That is, the honeycomb structure has been required to be designed for easier inspection of the end face geometry, more specifically, for easier mechanical and optical discrimination between the honeycomb unit and seal layer.

The present invention is generally directed to overcome the above-mentioned drawbacks of the related art by providing a honeycomb structure whose end face geometry can easily be inspected.

More particularly, the present invention is directed to provide a honeycomb structure in which the boundary between the honeycomb unit or honeycomb monolith and seal layer is clearly discernible.

The present invention proposes to design, for an aggregate type honeycomb structure made of a honeycomb block formed from a plurality of honeycomb units joined together, a seal layer to be laid between adjacent honeycomb units to join the latter to each other and seal layer formed over the outer surface of the honeycomb block, and for a monolith type honeycomb structure made of a honeycomb monolith formed from cells and cell walls each separating the adjacent cells from each other, a seal layer provided over the outer surface of the honeycomb monolith to seal the outer surface, as will be described below:

According to the present invention, there is provided a honeycomb structure made of a honeycomb block including a plurality of honeycomb units joined together across a seal layer laid between adjacent ones and each of which is formed from a plurality of cells laid longitudinally side by side and cell walls each separating the adjacent cells from each other, wherein the seal layer has a color of 60 or more in CIE (1976) psychometric lightness (L*) specified in the standard JIS Z 8729.

According to the present invention, there is also provided a honeycomb structure made of a honeycomb monolith including a plurality of cells disposed longitudinally side by side and cell walls each separating the adjacent cells from each other and a seal layer provided over the outer surface of the honeycomb monolith, wherein the seal layer has a color of 60 or more in CIE (1976) psychometric lightness (L*) specified in the standard JIS Z 8729.

In the above honeycomb structure according to the present invention, it is desirable that the outermost surface of the honeycomb block should be covered with a seal layer, the honeycomb block have a color of 80 or less in CIE (1976) lightness, the honeycomb monolith have a color of 80 or less in CIE (1976) lightness, the seal layer contain oxide particles, the oxide particles be of any one of alumina, zirconia, titania or silica, the cells be sealed at any one of its ends, a catalyst be carried in the honeycomb unit or honeycomb monolith and the honeycomb structure be used as an exhaust gas purifying apparatus for vehicles.

In the honeycomb structure constructed as above according to the present invention, the seal layer will have a color of 60 or more in CIE (1976) psychometric lightness (L*) in case the seal layer is interposed between the honeycomb units or is provided over the outermost surface of the honeycomb block or honeycomb monolith, resulting in achieving the effect that end face geometry can easily be inspected. In this honeycomb structure according to the present invention, since only the seal layer is light in color, exhaust gas can be purified without any efficiency reduction and uneven heating of the honeycomb structure so that the latter will have a considerably improved durability (service life).

Brief Description of the Drawings

FIG. 1 is a perspective view of a honeycomb structure (honeycomb block) 10 according to the present invention.
FIGS. 2(a) and 2(b) explain a honeycomb unit 20 according to the present invention.
FIGS. 3 (a) and 3(b) schematically illustrate a honeycomb structure (honeycomb monolith) 30 according to the present invention.
FIG. 4 is a sectional view of the on-vehicle exhaust gas purifying apparatus using the honeycomb structure according to the present invention.

Best Mode for Carrying Out the Invention

The inventors of the present invention have made studies of how to do for a definite difference between the honeycomb unit or honeycomb monolith and the seal layer in order to attain an improved efficiency of checking the end face geometry of the honeycomb structure. The study results revealed that by coloring the seal layer for a difference from that of the honeycomb unit or honeycomb monolith, clear discrimination is made possible between the honeycomb unit or honeycomb monolith and the seal layer so that the end face geometry, especially, the area of the seal layer etc. can be done more easily.

Also, if soot leaks from the honeycomb structure, it is possible to locate a defective portion.

However, when the color is controlled, adjustment of only the hue and color saturation will lead to a darker color in many cases with the result that the honeycomb units will easily be adiabatic-expanded or otherwise influenced. Therefore, it is effective in the color control to control the color lightness. Also, the color lightness control leads to control of the radiant heat transmission of exhaust gas, resulting in a variation of the exhaust gas temperature. The exhaust gas temperature variation effectively improves the efficiency of exhaust gas purification, eliminates difference in temperature between the central and peripheral portions of the honeycomb structure to prevent the latter from being broken, namely, to improve the durability. That is to say, control of the color lightness of the seal layer is effective.

With the above inventors' findings, the lightness of the seal layer is set to 60 or more in CIE (1976) psychometric lightness (L*) in the embodiments of the present invention. More specifically, when the seal layer is 60 or more in CIE (1976) psychometric lightness (L*), it can clearly be discriminated from, for example, the honeycomb unit made of a silicon carbide ceramic (L* = 40 to 45).

Note that CIE (1976) psychometric lightness (L*) is a numerical value of a material specified in the JIS standard JIS Z 8105 (2000), and more specifically, it is a numerical value defined by the following values as in the standard JIS Z 8729 (2004):

$$L* = 116(Y/Y_n)1/3 - 16 \ (\text{when } Y/Y_n > 0.008856);$$

and

$$L* = 903.29 \ (Y/Y_n) \ (\text{when } Y/Y_n \leq 0.008856)$$

where Y is a tristimulus value Y or $Y_{10}$ in XYZ color system or $X_{10}Y_{10}Z_{10}$ color system, respectively, and $Y_n$ is a value Y or $Y_{10}$ defined by the standard illuminant and auxiliary standard illuminant of a perfect reflector.

Note that the XYZ color system or $X_{10}Y_{10}Z_{10}$ color system is specified in the standard JIS Z 8701 (1999). More specifically, the psychometric lightness (L*) can be determined by the spectrophotometric colorimetry and tristimulus value direct reading as specified in the standard JIZ Z 8722 (2000). Also, the CIE (1976) psychometric lightness (L*) is represented by any of the numerical values 0 to 100 and can be calculated down to two places of decimals. The greater the numerical value, the higher the lightness is. On the contrary, the smaller the numerical value, the lower the lightness is.

Generally, the larger the amount of light reflection from an object, the greater numerical value the lightness will have. Also, the three primary colors (subtractive color mixing) of coloring agents can be represented by three colors: cyan, magenta and yellow. Since cyan absorbs red (orange) in the long-wave spectrum (600 to 700 nm), it will represent an aeruginous color. Absorbing green (yellow) in the medium-wave spectrum (400 to 500 nm), magenta will emit a burgundy color. Absorbing blue (purple) in the short-wave spectrum (300 to 400 nm), yellow will emit a yellow color.

When rays of light different in color from each other are mixed together, ones in the above color relation will be absorbed and reflected in absolutely reduced amount. Therefore, colorless light like white light is easily reflected and can easily be discernible from the other colored light in principle.

For preparation of a sealing material having a desired lightness as in the present invention, it is desirable to use a material containing oxide particles.

Since the oxide particles have light-scattering sources such as gas bubbles, lattice defect, OH group, etc., rays of light impinging upon the particles are easily scattered. In addition, the colorless oxide particles, namely, white ones, will not easily absorb impinging rays of light but reflect them.

That is to say, the darker the color of the material (seal layer), the more easily the material can absorb electromagnetic energy (radiant heat) generated by combustion of a hot exhaust gas, especially, heat rays of large wavelength (visible rays of light in addition to infrared rays). Thus, the seal layer will be lowered in rate of heat transfer by radiation and limited from being thermally expanded, so that exhaust gas will retain a high temperature for a long time and both the entire honeycomb structure including the central and peripheral portions be evenly heated without temperature gradient in the radial direction of the honeycomb structure.

The present invention will be illustrated and explained in detail below concerning honeycomb structures of an aggregate type and monolith type(integrate type).

The aggregate type honeycomb structure is a first embodiment of the present invention. It is made of a honeycomb block formed by joining a plurality of honeycomb units to each other with a seal layer laid between adjacent honeycomb units into the form of pillar shape. Each of the honeycomb units is a pillar shaped honeycomb ceramic member formed from a plurality of cells (through-hole) laid longitudinally side by side and cell walls each separating adjacent cells from each other.

On the other hand, the monolith type honeycomb structure is a second embodiment of the present invention. It is formed as a single unit, namely, as a honeycomb monolith.

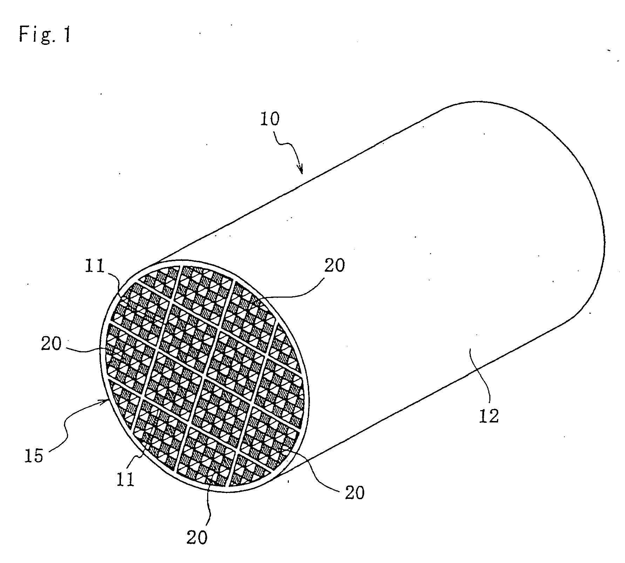

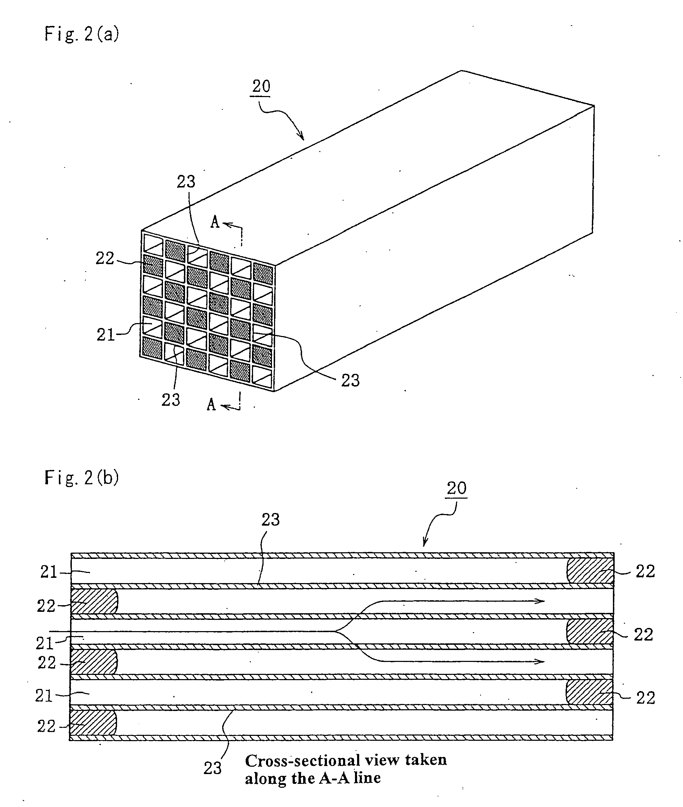

Referring now to FIG. 1, there is schematically illustrated in the form of a perspective view an example of the aggregate type honeycomb structure as the first embodiment of the present invention. The aggregate type honeycomb structure is generally indicated with a reference numeral 10. FIG. 2(a) is a perspective view of an example of each of honeycomb ceramic members (will be referred to as "honeycomb unit" hereunder) forming together the aggregate type honeycomb structure 10 shown in FIG. 1, and FIG. 2(b) is a sectional view, taken along the line A-B, of the honeycomb unit in FIG. 2(a). The honeycomb unit is generally indicated with a reference numeral 20. The honeycomb unit 20 includes a plurality of cells 21 (through-hole) formed extending from this side to that side. The cells 21 are laid side by side, each being separated from the other by a cell wall 23, to form together a honeycomb structure. Also, the cells 21 may be sealed each at one end thereof with a plug material 22 for the honeycomb unit 20 to have checkered-pattern ends as necessary, for example, for removing particulates.

A bundle of the plurality of honeycomb units 20 laid longitudinally side by side and joined together across a seal layer 11 laid between adjacent ones is referred to herein as "honeycomb block" 15. Between the outermost surface of the honeycomb block 15 and a casing, there should desirably be provided a seal layer (will also be referred to as "coating layer" hereunder wherever appropriate) 12 to reinforce the honeycomb block and prevent exhaust gas from leaking. In this aggregate type honeycomb structure 10, even if the individual honeycomb units 20 are low in mechanical strength, thermal shock resistance, etc., the existence of the seal layer 11 and coating layer 12 improves the thermal shock resistance and vibration resistance of the aggregate type honeycomb structure as a whole.

That is, the aggregate type honeycomb structure is high in thermal shock resistance and vibration resistance as above. It is inferred that even if a temperature distribution is caused to arise in this honeycomb structure by an abrupt change in temperature or the like, the difference in temperature between the honeycomb units 20 is small and the seal layer 11 and coating layer 12 absorb the thermal shock and vibration. Also, even if a crack has arisen in a honeycomb unit 20 due to a thermal stress or the like, the seal layer 11 and coating layer 12 effectively block the crack from spreading over the entire honeycomb structure. Further, the outermost seal layer, that is, the coating layer 12, plays also a roll of a protective frame for the honeycomb structure and effectively maintains the shape of the honeycomb structure for a long term to improve the durability of the honeycomb structure.

Note that the honeycomb units 20 should preferably be formed for easy joining between each other. For example, the section of the honeycomb unit 20, perpendicular to the length of the cells (will be referred to as "unit section" hereunder), should desirably be square, rectangular or hexagonal. Also, the unit section may be fan-shaped.

Also, the honeycomb unit 20 should preferably have a sectional area of 5 to 50 cm$^2$. If the area of the unit section is smaller than 5 cm$^2$, the pressure loss will be larger. On the other hand, if the sectional area is larger than 50 cm$^2$, a thermal stress developed in the honeycomb structure cannot be dispersed so that the honeycomb structure is likely to crack even when it is applied with the thermal stress. For the above effect to be higher, the area of the unit section should more preferably be on the order of 6 to 40 cm$^2$ or 8 to 30 cm$^2$.

The honeycomb block 15 formed from an assembly of a plurality of the honeycomb units 20 constructed as above and which is substantially the honeycomb structure should preferably be formed in, for example, cylindrical, rectangular pillar or cylindroid.

The base material (skeletal component) of the honeycomb unit may be inorganic particles, fibers or whiskers of any one selected from among, for example, nitride ceramics such as aluminum nitride, silicon nitride, boron nitride, titanium nitride, etc., carbide ceramics such as silicon carbide, zirconium carbide, titanium carbide, tantalum carbide, tungsten carbide, etc. and oxide ceramics such as alumina, zirconia, cordierite, mullite, etc. Among these materials, the silicon carbide ceramics should preferably be used because they are excellent in thermal resistance and mechanical properties and high in heat conductivity. Especially, ceramic containing metallic silicon, silicon- or silicate compound-bonded ceramic or the like may be suitably usable. It should be noted that the silicon carbide ceramics include a ceramic formed from only silicon carbide as well as a ceramic in which silicon carbide is bonded by a metal, crystalloid or amorphous compound.

In addition to the above-mentioned skeletal component (base material), the material of the honeycomb unit may contain a sub component (material). That is, the honeycomb unit may be a "hybrid type honeycomb unit".

The hybrid type honeycomb unit should preferably contain at least inorganic ceramic particles and inorganic binder as base materials and also a heterogeneous inorganic material (reinforcing material) as a sub material. Since the inorganic ceramic particles can be bound together by the inorganic binder, such a honeycomb unit can be strong enough to stably maintain the honeycomb shape.

Note here that in the hybridization of the inorganic materials as base and sub materials, respectively, the main and sub materials are different in components from each other, or they are identical in components to each other but different in shape from each other (for example, in particle size, aspect ratio, etc.) and physicality (for example, in crystal form, melting temperature, etc.). The hybridization of the honeycomb unit effectively contributes to an improved strength of the honeycomb structure.

The inorganic material as the sub material may be ceramic particles of one or more than one selected from among, for example, silicon carbide, silicon nitride, alumina, silica, zirconia, titania, ceria, zeolite and mullite. Also, the inorganic fibers as the sub material, if applicable, may be ceramic fibers of one or more than one selected from among, for example, alumina, silica, silicon carbide, silica alumina, glass, potassium titanate and aluminum borate, or whiskers of one or more than one selected from among, for example, alumina, silica, zirconia, titania, ceria, mullite, silicon carbide, etc. The above materials may be used singly or two or more of them be used in combination. Of the above inorganic fibers, the alumina fiber is most desirable.

The hybrid type honeycomb unit is produced using the inorganic binder for the latter is considered to effectively assure a sufficient strength of the honeycomb unit even if baking is made at a low temperature. The inorganic binder may be, for example, inorganic sol, clay binder or the like. For example, an inorganic sol of one or more than one selected from among, for example, alumina, silica, titania and water glass may be used as the inorganic binder. Also, one or more than one selected from among, for example, clay, china clay, montmorillonite, double-chain structure clay (sepiolite and attapulgite), etc. may be used as the clay binder.

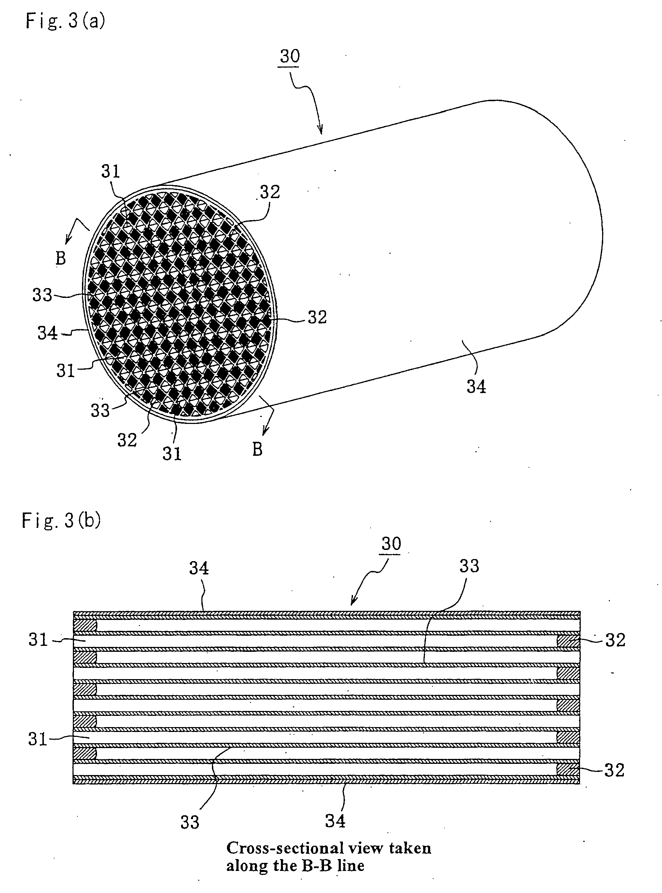

Referring here to FIG. 3(a), there is schematically illustrated in the form of a perspective view the monolith type honeycomb structure as the second embodiment of the present invention. FIG. 3(b) is a sectional view taken along the line B-B in FIG. 3(a). As shown, the monolith type honeycomb structure, generally indicated with a reference numeral 30, is a pillar-shaped honeycomb monolith formed from an assembly of a plurality of cells 31 laid longitudinally side by side with cell walls 33 laid between adjacent cells. The monolith type honeycomb structure 30 is constructed similarly to the aggregate type honeycomb structure 10 except that the honeycomb monolith is of a monolith structure formed by sintering.

The monolith type honeycomb structure 30 has formed on the outer surface of the honeycomb monolith a seal layer (will also be referred to as "coating layer") 34 which prevents exhaust gas from leaking and reinforces the honeycomb monolith.

Each of these honeycomb structures 10 and 30 according to the present invention is usable as an exhaust gas purifying filter to remove particulates in the exhaust gas. In this case, the porosity of the honeycomb unit should preferably be on the order of 20 to 80%, and more preferably 50 to 70%. If the porosity of the honeycomb unit is under 20%, the pressure loss of the filter is likely to be higher. On the other hand, if the porosity is over 80%, the honeycomb structure will have the strength thereof decreased and thus will possibly be broken easily. It should be noted that in case a catalyst is added to the cell walls, the pressure loss will easily be higher. On this account, the porosity of the cell walls should desirably be on the order of 50 to 70%. Also note that the porosity can be measured by a conventional well-known method such as the mercury injection method, Archimedes method and SEM (scanning electron microscopy).

In case each of these honeycomb structures is used as an exhaust gas purifying filter to purify exhaust gas, the mean pore diameter of the honeycomb structure should preferably be 5 to 100 $\mu$m. If the mean pore diameter is under 5 $\mu$m, the pressure loss of the filter against the exhaust gas will be higher. On the other hand, if the mean pore diameter is over 100 $\mu$m, the particulates in the exhaust gas will easily pass through the pores and thus be captured with a lower efficiency.

Next, description will be made of the seal layer. A material used to form the seal layer is selected based on a predetermined psychometric lightness (L*) ($\geq$ 60). The material may be mainly a mixture of oxide particles and inorganic binder, a mixture of oxide particles, inorganic fiber and inorganic binder, a mixture of oxide particles, inorganic particles and inorganic binder, a mixture of oxide particles, inorganic fiber, inorganic particles and inorganic binder, all these mixtures having a high psychometric lightness (L*), or any one of these mixtures to which an organic binder is further added. All these mixtures should have a psychometric lightness (L*) of 60 or more.

The oxide particles may be oxide ceramic particles, fibers or whiskers of any one selected from among, for example, alumina, silica, titania, zirconia, cordierite, mullite and the like. These materials may be used singly or two or more of them be used in combination.

The above inorganic binders include those which will lower the psychometric lightness (L*) such as silica sol, alumina sol and the like. Each of them may be used singly or more than one of them be used in combination. Among these inorganic binders, silica sol should desirably be used.

The above inorganic fibers include, for example, ceramic fibers of silica-alumina, mullite, alumina, silica and the like. Each of them may be used singly or two or more of them be used in combination. Among these inorganic fibers, the ceramic fiber of silica-alumina should desirably be used.

Desirably, the inorganic particles should basically be those which will not have any influence on the psychometric lightness (L*). For example, ceramic of carbide, nitride or the like may be used. However, an inorganic powder or whisker of silicon nitride, boron nitride or the like should preferably be used.

As the organic binder, there may be used any one or more than one selected from among, for example, polyvinyl alcohol, methyl cellulose, ethyl cellulose, carboxymethyl cellulose, etc.

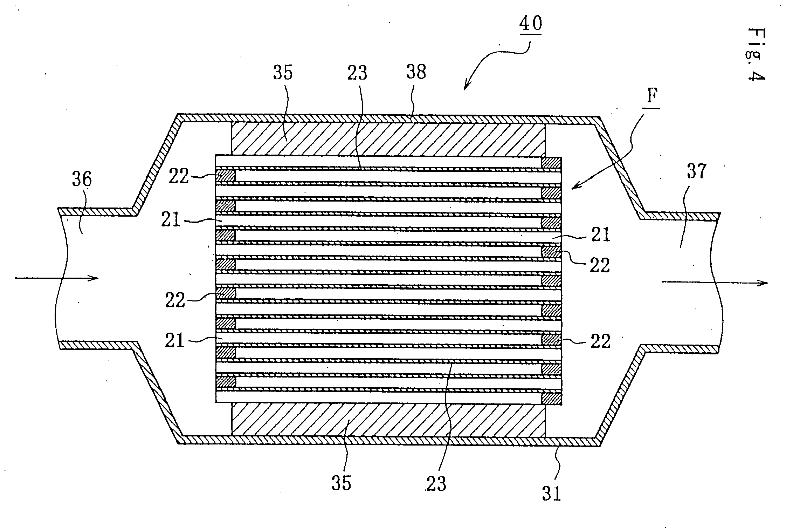

The above-mentioned honeycomb structure according to the present invention may be used as an exhaust gas purifying filter. FIG. 4 shows an example of the on-vehicle exhaust gas purifying apparatus in which the honeycomb structure according to the present invention is used as an exhaust gas purifying filter. As shown, the exhaust gas purifying apparatus, generally indicated with a reference numeral 40, includes an exhaust gas purifying filter F formed from the honeycomb structure according to the present invention, a casing 38 to cover the outer surface of the exhaust gas purifying filter F, a hermetic sealing member 35 to be interposed between the exhaust gas purifying filter F and casing 38, and a heating means (not shown) provided at an exhaust gas inlet as necessary. An inlet pipe 36 connected to an engine such as an internal combustion engine is connected to an end of the casing 38 where exhaust gas is introduced, and an exhaust pipe 37 connected to outside is connected to the other end of the casing 38.

Exhaust gas coming from the internal combustion engine is passed through the inlet pipe 36, introduced into the exhaust gas purifying apparatus 40, and flows into the exhaust gas purifying filter F through cells open at their inlet ends (outlet ends are sealed with a plug material 22). When the exhaust gas passes through cell walls 23, particulates in the exhaust gas are captured, namely, purified, by the cell walls 23. Then, the purified exhaust gas is discharged through cells open at their outlet ends to outside the exhaust gas purifying filter F, and exhausted to outside through the exhaust pipe 37. It should be noted that in case the exhaust gas contains no particulates, the plug material 22 is unnecessary.

Also, in this exhaust gas purifying apparatus 40, the particulates will be massively deposited on the cell walls 23 of the exhaust gas purifying filter F. When the pressure loss becomes large, the exhaust gas purifying filter F is to be regenerated. In this regeneration, the hot exhaust gas or gas heated by a heating means such as catalyst, heater and the like provided as necessary is made to flow back into the cells 21 to heat the exhaust gas purifying filter F to burn and remove the particulates deposited on the cell walls 23.

Next, there will be explained an example of the method of producing the honeycomb structure according to the present invention:

First, a material paste containing mainly the aforementioned material (one kind for a normal honeycomb unit while an inorganic material as the base material, inorganic material as the sub material, inorganic binder, etc. for a hybrid type honeycomb unit) is prepared, and the paste is extrusion-molded to prepare a green molding of a honeycomb unit. To the material paste, there may appropriately be added an organic binder, dispersant and molding additive in addition to the above. The organic binder may be one or more than one selected from among, for example, methyl cellulose, carboxymethyl cellulose, hydroxyethyl cellulose, polyethylene glycol, phenol resin and epoxy resin. The proportion of this organic binder should preferably be 1 to 10 % by mass in relation to 100 % by mass in total of the inorganic material of the first type, inorganic material of the second type and inorganic binder. The dispersant may be, for example, water, organic solvent (such as benzene or the like) or alcohol (such as methanol or the like). The molding additive may be, for example, ethylene glycol, dextrine, fatty acid, fatty acid soap or polyalcohol.

The material paste should be kneaded sufficiently by a mixer, attritor, kneader or the like, for example. The material paste should preferably be extrusion-molded to form the cells and cell walls.

Next, the green molding is dried by a microwave dryer, hot-air dryer, dielectric dryer, reduced-pressure dryer, vacuum dryer or freeze-dryer. Then, the cells are sealed at one of their opposite ends with a plug material and the molding is dried.

Next, the green molding is degreased. The degreasing conditions are to be adjusted according to the type and volume of the organic material in the green molding. For example, the degreasing should preferably be done at 400°C for 2 hours. Then, the green molding thus dried and degreased is fired. The firing should preferably be done at a temperature of 600 to 2200 °C, for example. Especially, a green molding of oxide ceramic should preferably be fired in an inactive-gas atmosphere at 600 to 1200 °C. With the above operations, there can be produced a honeycomb unit 20 formed from a porous ceramic member having a honeycomb structure including a plurality of cells.

Thereafter, the honeycomb unit 20 thus fired is subjected to heat treatment, as necessary, in an acidized atmosphere at a temperature of higher than 700°C to form an oxide film on the surface of the honeycomb unit 20. Alternatively, an oxide layer is formed on the surface of the honeycomb unit 20 by coating an oxide ceramic.

Next, the sealing material paste prepared from the aforementioned materials is applied to the outer surface of the honeycomb unit 20 thus prepared to provisionally join a plurality of such honeycomb units 20 (16 pieces in the embodiment shown in FIG. 1) together.

Then, the honeycomb units 20 thus provisionally joined together are stably joined to each other by drying to provide a honeycomb block (honeycomb structure) having predetermined dimensions. The drying temperature for stabilizing the honeycomb units joined together varies a little depending upon the type and volume of the organic material used, but it should normally be within a range of 100 to 200 °C.

Note that the seal layer 11 provided between the adjacent honeycomb units may be compact but it should preferably be porous to permit the exhaust gas to flow through. However, at least the coating layer 12 as the outermost layer should desirably be a compact layer for the reason that when the aggregate type honeycomb structure according to the present invention is installed in an exhaust gas passage of the exhaust gas purifying apparatus 40, the coating layer 12 is to prevent the exhaust gas from leaking from the outer surface of the honeycomb block.

The seal layer 11 used to join the honeycomb units together should preferably be on the order of 0.1 to 3 mm in thickness. If the thickness of the seal layer 11 is under 0.1 mm, it is not possible to assure any sufficient adhesion strength. On the other hand, a thickness of over 3 mm will possibly lead to a larger pressure loss.

A seal layer may be applied to the outer surface (lateral face) of the honeycomb structure, and stabilized by drying to form the seal layer (coating layer) 12. The coating layer 12 should preferably be formed to protect the outer surface of the honeycomb units and reinforce the honeycomb units. The sealing material for the coating layer 12 is not limited to any special one, but it may be the same as, or different from that of the seal layer 11. The coating layer should preferably be 0.1 to 3 mm thick. If the thickness is under 0.1 mm, the outer surface of the honeycomb block cannot sufficiently be protected, which may possibly lead to gas leakage, and the honeycomb block cannot be reinforced. On the other hand, a thickness of over 3 mm will lead to cracking in the honeycomb structure when the latter is applied with a thermal stress as well as to a larger pressure loss. The coating layer may be dried and stabilized under almost the same conditions as those for the seal layer.

After joining the honeycomb units together to each other with the seal layer 11 or forming the coating layer 12, the assembly of honeycomb units is calcinated. With this calcination, the assembly can be degreased in case the sealing material and coating material contain any organic binder. The calcination is effected under conditions which should appropriately be determined according to the type and volume of an organic material, if any, existing in the honeycomb-unit assembly, but it should preferably be done at a temperature of 400 to 800 °C for a time of 1 to 2 hours. When the honeycomb structure thus subjected to the calcination is used, the organic binder remaining in the honeycomb structure will be burnt and thus no contaminated exhaust gas will be discharged.

Also, the honeycomb structure thus obtained still carries the catalyst component, and the catalyst component can be used as a honeycomb catalyst. The catalyst component may be a noble metal, alkali metal compound, alkali earth metal compound, oxide or the like but it is not limited to any one of them. As the noble metal, there may be used one or more than one selected from among, for example, platinum, palladium and rhodium. The alkali metal compound may be one or more than one selected from among, for example, potassium, sodium and the like. The alkali earth metal compound may be, for example, a compound of barium. The oxides include perovskite ($La_{0.75}K_{0.25}MnO_3$, etc.), $CeO_2$ or the like. The honeycomb catalyst may be the so-called three-component catalyst or $NO_x$ occlusion catalyst for use in the on-vehicle exhaust gas purifying apparatus, for example.

Examples:

The present invention will be described in detail below concerning the examples thereof, but it is not limited to these embodiments only.

Test 1

The embodiments of the present invention were tested by preparing a plurality of seal layers (adhesive and coating material) different in materials such as oxide from each other, and applying it on the outer surfaces of the honeycomb units formed from silicon carbide and fiber-reinforced alumina, the outer surfaces being different in surface roughness from each other. The action and effect of the seal layers were evaluated.

- Preparing the sealing material paste

For this test, seven types of pastes of sealing material were prepared. Each paste was composed as shown in Table 1.
For example, the paste No. 1 was a heat-resistant sealant paste that was a mixture of an inorganic powder ($\alpha$-alumina particles of 0.01 1 $\mu$m in mean size) in 30% by mass, inorganic fiber (silica-alumina fiber of 10 $\mu$m in mean diameter and 200 $\mu$m in mean length) in 10% by mass, silica sol (30% by mass in solid content) in 30% by mass, carboxymethyl cellulose in 5% by mass and water in 25% by mass.
Similarly, other 13 types of pastes were prepared which were different in proportion of the material powder, inorganic powder, silica sol and carboxymethyl cellulose from the paste No. 1 and each other as shown in Table 1.

- Measuring the psychometric lightness

Each of the above pastes was shaped to a diameter of 50 mm and thickness of 5 mm, solidified at 120°C, and then heat-treated at 600°C for 3 hours. Each of the samples prepared above was tested for color by a spectrocolorimeter (SPECTRO COLOR METER Model SQ2000 by the Nippon Denshoku). The results of measurement are also shown in Table 1.
## Table 1

| Paste | Inorganic powder: α-alumina | Inorganic powder: zirconia | Inorganic powder: SiC | Mean particle size of inorganic powders | Silica-alumina fiber (200μm in length; 10μm in diameter) | Silica-sol solid content | Carboxy-methyl cellulose | Water | Psycho-metric lightness |
|---|---|---|---|---|---|---|---|---|---|
| | % by mass | % by mass | % by mass | μm | % by mass | % by mass | % by mass | % by mass | L* |
| 1 | 30 | 0 | 0 | 0.5 | 10 | 30 | 5 | 25 | 96.27 |
| 2 | 25 | 0 | 5 | 0.5 | 10 | 30 | 5 | 25 | 91.77 |
| 3 | 20 | 0 | 10 | 0.5 | 10 | 30 | 5 | 25 | 87.27 |
| 4 | 15 | 0 | 15 | 0.5 | 10 | 30 | 5 | 25 | 82.77 |
| 5 | 10 | 0 | 20 | 0.5 | 10 | 30 | 5 | 25 | 78.27 |
| 6 | 5 | 30 | 25 | 0.5 | 10 | 30 | 5 | 25 | 73.77 |
| 7 | 0 | 30 | 0 | 0.5 | 10 | 30 | 5 | 25 | 87.28 |
| 8 | 0 | 25 | 5 | 0.5 | 10 | 30 | 5 | 25 | 81.88 |
| 9 | 0 | 20 | 10 | 0.5 | 10 | 30 | 5 | 25 | 76.48 |
| 10 | 0 | 15 | 15 | 0.5 | 10 | 30 | 5 | 25 | 71.08 |
| 11 | 0 | 10 | 20 | 0.5 | 10 | 30 | 5 | 25 | 65.68 |
| 12 | 0 | 5 | 25 | 0.5 | 10 | 30 | 5 | 25 | 60.28 |
| 13 | 0 | 0 | 30 | 0.5 | 10 | 30 | 5 | 25 | 55.24 |

Producing honeycomb structures

(1) Producing a silicon-carbide honeycomb unit

A silicon carbide powder (particles of 8.5 $\mu$m in mean diameter) in 80% by mass and a silicon carbide powder (particles of 0.2 $\mu$m in mean size) in 20% by mass were mixed to prepare a material powder for the silicon-carbide honeycomb structure. Next, 10 parts by mass of methyl cellulose as molding additive was added to 100 parts by mass of the material powders, and they were mixed together. Further, 18 parts by mass of a dispersant composed of an inorganic solvent and water were added to the mixture, and all these materials were kneaded together to prepare a paste. Finally, the paste thus prepared was extrusion-molded by a mold designed for an intended honeycomb shape to form a honeycomb molding having many cells, and the honeycomb molding was sealed at either of the opposite ends of the cells with a plug material to have checkered-pattern ends. The honeycomb molding was dried at 150°C, degreased at 500°C and then fired in an inactive-gas atmosphere at 2200°C to form a honeycomb unit having dimensions of 34.3 $\times$ 34.3 $\times$ 150 mm.

The psychometric lightness (L*) on the surface of the honeycomb unit thus formed was measured as in the psychometric-lightness measurement of the sealing material samples, and the psychometric lightness (L*) measured was 40.23 (also shown in Table 2).

(2) Producing a silicon carbide-silicon (SiC-Si) honeycomb structure

- Producing a silicon carbide-silicon honeycomb unit

A silicon carbide powder (particles of 8.5 $\mu$m in mean diameter) in 80% by mass and a silicon carbide powder (particles of 0.2 $\mu$m in mean size) in 20% by mass were mixed to prepare a material powder for the silicon carbide-silicon honeycomb structure.

Next, 10 parts by mass of methyl cellulose as molding additive was added to the 100 parts by mass of the material powder, and they were mixed together. Further, 18 parts by mass of a dispersant composed of an inorganic solvent and water were added to the mixture, and all these materials were kneaded together to prepare a paste. Finally, the paste thus prepared was extrusion-molded by a mold designed for an intended honeycomb shape to form a honeycomb molding having many through-holes, and the honeycomb molding was sealed at either of the opposite ends of the through-holes with a sealant to have checkered- pattern ends. The honeycomb molding was dried at 150°C, degreased at 500°C and then fired in an inactive-gas atmosphere at 1400°C to form a honeycomb unit having dimensions of 34.3 $\times$ 34.3 $\times$ 150 mm.

The psychometric lightness (L*) on the surface of the honeycomb unit thus formed was measured as in the psychometric-lightness measurement of the sealing material paste samples, and the psychometric lightness (L*) measured was 44.67 (also shown in Table 3).

- Producing an aggregate type honeycomb structure

Next, 16 samples of the honeycomb unit were prepared, and those of them which were equivalent in level to each other were joined to each other with the aforementioned sealing material paste. The assembly of the honeycomb-unit samples were dried at 150°C for 2 hours, and then based at 500°C. Thereafter, the assembly was cut at the corners thereof using a diamond cutter to provide a cylindrical ceramic block (aggregate type honeycomb structure).

Cylindrical exhaust gas purifying honeycomb filters (of about 140 mm in diameter and 150 mm in length) were produced with the seal layer and coating layer (outermost layer) being varied in thickness as shown in Tables 2 and 3 from one filter to another.

Producing a monolith type honeycomb structure

- Producing a cordierite-made monolith type honeycomb structure

Forty parts by mass of a talc powder (10 $\mu$m in mean particle size), 10 parts by mass of china clay (9 $\mu$m in mean particle size), 17 parts by mass of alumina powder (9.5 $\mu$m in mean particle size), 16 parts by mass of aluminum hydroxide powder (5 $\mu$m in mean particle size), 15 parts by mass of silica powder (10 $\mu$m in mean particle size), 10 parts by mass of acrylic powder (40 $\mu$m in mean particle size), 5 parts by mass of methyl cellulose and 18 parts by mass of a dispersant composed of organic solvent and water were kneaded together.

The paste thus prepared was extrusion-molded by a mold designed for an intended honeycomb shape to provide a honeycomb molding having many through-holes, and the honeycomb molding was sealed at either of the opposite ends of the through-holes with a plug material to have checkered-pattern ends. The molding was dried at 140°C, degreased at 400°C, and fired in the atmospheric air at 1400°C to form a monolith type honeycomb monolith of 143.8 × 150 mm in dimensions.

After the cell walls were flattened, the psychometric lightness (L*) on the surface of the sample was measured as in the psychometric-lightness measurement of the sealing material paste samples and the result of measurement was 58.67 (also shown in Table 4).

Cylindrical exhaust gas purifying filters were produced with the coating layer being varied in thickness as shown in Tables 4 from one filter to another.

Evaluation

Each of the honeycomb structures was placed on a black drafting paper (color drafting paper by the Bun-undo Co., Ltd.) with one end thereof upside, and imaged by a digital camera (D70 by Nikon) positioned 10 cm above the end. Image data captured by the digital camera was checked on a personal computer screen. The data was binarized by a computer Image-Pro Plus (by MEDIA CYBERNETICS).

Of the boundaries between the honeycomb units thus observed, clear ones are indicated with a small circle (o) while unclear ones are indicated with a small cross (x), in Tables 2 to 4.

Table 2

| | Psychometric lightness (L*) | Seal layer thickness | | | | Coating layer thickness | | | |
|---|---|---|---|---|---|---|---|---|---|
| | | 0.3mm | 0.5mm | 1.0mm | 3.0mm | 0.3mm | 0.5mm | 1.0mm | 3.0mm |
| SiC filter | 40.23 | | | | | | | | |
| 1 | 96.27 | o | o | o | o | o | o | o | o |
| 2 | 91.77 | o | o | o | o | o | o | o | o |
| 3 | 87.27 | o | o | o | o | o | o | o | o |
| 4 | 82.77 | o | o | o | o | o | o | o | o |
| 5 | 78.27 | o | o | o | o | o | o | o | o |
| 6 | 73.77 | o | o | o | o | o | o | o | o |
| 7 | 87.28 | o | o | o | o | o | o | o | o |
| 8 | 81.88 | o | o | o | o | o | o | o | o |
| 9 | 76.48 | o | o | o | o | o | o | o | o |
| 10 | 71.08 | o | o | o | o | o | o | o | o |
| 11 | 65.68 | o | o | o | o | o | o | o | o |
| 12 | 60.28 | o | o | o | o | o | o | o | o |
| 13 | 55.24 | × | o | o | o | × | × | o | o |

Table 3

| | Psychometric lightness (L*) | Seal layer thickness | | | | Coating layer thickness | | | |
|---|---|---|---|---|---|---|---|---|---|
| | | 0.3mm | 0.5mm | 1.0mm | 3.0mm | 0.3mm | 0.5mm | 1.0mm | 3.0mm |
| SiSiC filter | 44.67 | | | | | | | | |
| 1 | 96.27 | o | o | o | o | o | o | o | o |
| 2 | 91.77 | o | o | o | o | o | o | o | o |
| 3 | 87.27 | o | o | o | o | o | o | o | o |
| 4 | 82.77 | o | o | o | o | o | o | o | o |

(continued)

| | Psychometric lightness (L*) | Seal layer thickness | | | | Coating layer thickness | | | |
|---|---|---|---|---|---|---|---|---|---|
| | | 0.3mm | 0.5mm | 1.0mm | 3.0mm | 0.3mm | 0.5mm | 1.0mm | 3.0mm |
| 5 | 78.27 | o | o | o | o | o | o | o | o |
| 6 | 73.77 | o | o | o | o | o | o | o | o |
| 7 | 87.28 | o | o | o | o | o | o | o | o |
| 8 | 81.88 | o | o | o | o | o | o | o | o |
| 9 | 76.48 | o | o | o | o | o | o | o | o |
| 10 | 71.08 | o | o | o | o | o | o | o | o |
| 11 | 65.68 | o | o | o | o | o | o | o | o |
| 12 | 60.28 | o | o | o | o | o | o | o | o |
| 13 | 55.24 | × | × | o | o | × | × | o | o |

Table 4

| | Psychometric lightness (L*) | Coating layer thickness | | | |
|---|---|---|---|---|---|
| | | 0.3mm | 0.5mm | 1.0mm | 3.0mm |
| Cordierite filter | 58.67 | | | | |
| 1 | 96.27 | o | o | o | o |
| 2 | 91.77 | o | o | o | o |
| 3 | 87.27 | o | o | o | o |
| 4 | 82.77 | o | o | o | o |
| 5 | 78.27 | o | o | o | o |
| 6 | 73.77 | o | o | o | o |
| 7 | 87.28 | o | o | o | o |
| 8 | 81.88 | o | o | o | o |
| 9 | 76.48 | o | o | o | o |
| 10 | 71.08 | o | o | o | o |
| 11 | 65.68 | o | o | o | o |
| 12 | 60.28 | × | o | o | o |
| 13 | 55.24 | × | × | × | × |

Normally, the seal layer of a filter should have a thickness of at least 0.5 mm or more. The results of the experiments made on the filters according to the present invention revealed that the seal layer of 0.5 mm or more could be recognized by imaging as above. A sample including a seal layer or coating layer of 1 mm in thickness was pierced at random with 5 carbon bars of 0.3 mm in thickness and 150 mm in length, and heated in an oxygen atmosphere at 800°C to form through-holes in the sample. After a 3L engine was driven at a speed of 3000 rpm and with a torque 50 Nm for 5 hours with the filter being installed, the filter was taken out and the seal layers at the end face of the filer was visually inspected from the side of the exhaust pipe 37 (in FIG. 4).

In the seal layer of the filters using the pastes 1 to 12, respectively, black soot was visually found at 5 places. In the seal layer of the filter using the paste 13, no soot was visually found. However, in the seal layer cut longitudinally, there was found penetration of the black soot. The black soot was found to have reached at the filter end. Namely, it was inferred that the action and effect of the filters could not visually be verified.

Industrial Applicability

As having been described in the foregoing, the honeycomb structure according to the present invention is used as an exhaust gas purifying apparatus or filter for purifying exhaust gas discharged from an internal combustion engine, boiler, heating furnace, gas turbine or various industrial processes. It should desirably be used as a catalyst carrier (converter) having an on-vehicle exhaust gas converting or a diesel particulate filter (DPF) having a function to filtrate and remove, by combustion, particulate matters (PM) in exhaust gas. Of course, it is utilizable for any other application (adsorption of gas and liquid components, for example) without carrying any catalyst component or for a similar application.

**Claims**

1. A honeycomb structure made of a honeycomb block including a plurality of honeycomb units joined together across a seal layer laid between adjacent ones and each of which is formed from a plurality of cells laid longitudinally side by side and cell walls each separating the adjacent cells from each other, wherein:

   the seal layer has a color of 60 or more in CIE (1976) psychometric lightness (L*) specified in the standard JIS Z 8729.

2. The honeycomb structure according to claim 1, wherein the outermost surface of the honeycomb block is covered with a seal layer formed thereon.

3. The honeycomb structure according to claim 1 or 2, wherein the honeycomb unit have a color of 80 or less in CIE (1976) psychometric lightness.

4. The honeycomb structure according to anyone of claims 1 to 3, wherein the seal layer contains oxide particles.

5. The honeycomb structure according to claim 4, wherein the oxide particles are of any one of alumina, zirconia, titania or silica.

6. The honeycomb structure according to anyone of claims 1 to 5, wherein the cells are sealed at either of the ends thereof.

7. The honeycomb structure according to anyone of claims 1 to 6, wherein a catalyst is carried in the honeycomb unit.

8. The honeycomb structure according to anyone of claims 1 to 7, being used as an on-vehicle exhaust gas purifying apparatus.

9. A honeycomb structure made of a honeycomb monolith including a plurality of cells disposed longitudinally side by side and cell walls each separating the adjacent cells from each other and a seal layer provided over the outer surface of the honeycomb monolith, wherein:

   the seal layer has a color of 60 or more in CIE (1976) psychometric lightness (L*) specified in the standard JIS Z 8729.

10. The honeycomb structure according to claim 9, wherein the honeycomb monolith has a color of 80 or less in CIE (1976) lightness.

11. The honeycomb structure according to claim 9 or 10, wherein the seal layer contains oxide particles.

12. The honeycomb structure according to claim 11, wherein the oxide particles are of any one of alumina, zirconia, titania or silica.

13. The honeycomb structure according to anyone of claims 9 to 12, wherein the cells are sealed at either of the ends thereof.

14. The honeycomb structure according to anyone of claims 9 to 13, wherein a catalyst is carried in the honeycomb monolith.

15. The honeycomb structure according to anyone of claims 9 to 14, being used as an on-vehicle exhaust gas purifying apparatus.

Fig. 1

Fig. 2(a)

Fig. 2(b)

Cross-sectional view taken
along the A-A line

Fig. 3 (a)

Fig. 3 (b)

**Cross-sectional view taken along the B-B line**

Fig. 4

**European Patent Office**

**EUROPEAN SEARCH REPORT**

Application Number

EP 06 29 0463

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/045267 A1 (ICHIKAWA SHUICHI ET AL) 11 March 2004 (2004-03-11) * examples 1-5; tables 1,2 * ----- | 1-15 | INV. C04B38/00 C04B37/00 B01J35/04 |
| X,D | EP 1 489 277 A (IBIDEN CO., LTD) 22 December 2004 (2004-12-22) * example 1 * ----- | 1-15 | |

TECHNICAL FIELDS SEARCHED (IPC)

C04B
B01J

The present search report has been drawn up for all claims

| Place of search | Date of completion of the search | Examiner |
|---|---|---|
| Munich | 4 July 2006 | Sala, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 29 0463

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2006

| Patent document cited in search report | | Publication date | Patent family member(s) | | Publication date |
|---|---|---|---|---|---|
| US 2004045267 | A1 | 11-03-2004 | EP | 1437168 A1 | 14-07-2004 |
| | | | WO | 03033104 A1 | 24-04-2003 |
| | | | JP | 2003117322 A | 22-04-2003 |
| | | | PL | 361655 A1 | 04-10-2004 |
| EP 1489277 | A | 22-12-2004 | CN | 1656307 A | 17-08-2005 |
| | | | WO | 03081001 A1 | 02-10-2003 |
| | | | US | 2005169819 A1 | 04-08-2005 |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8028246 A
- WO 03081001 A
- JP 2001206780 A
- JP 2001190916 A